# EUROPEAN PATENT APPLICATION

(11) **EP 1 710 569 A1**
(43) Date of publication of application: **11.10.2006**
(21) Application number: 06007060.4
(22) Date of filing: 03.04.2006
(51) Int. Cl.: G01N 27/62

(54) **Gas analyzer and method for controlling hydrogen flame ionization detector**

(30) Priority: 04.04.2005 JP 2005107888
(71) Applicant: HORIBA, LTD., Kyoto-shi, Kyoto (JP)
(72) Inventor: Nakamura, Hiroshi, Minami-ku Kyoto-city Kyoto (JP)
(74) Representative: Müller - Hoffmann & Partner

(57) **Abstract**

An object of this invention is to provide a gas analyzer (100) including a hydrogen flame ionization detector (5). The gas analyzer (100) supplies a hydrogen flame ionization detector (5) that mixes sample gas with fuel gas, burns the mixed gas in a combustion chamber (51) and detects an ionic current generated at the time when the mixed gas is burnt by a collector (52) with hydrogen gas whose concentration is generally 100% as the fuel gas and controls the pressure in the combustion chamber (51) to be lower than the pressure of atmospheric air.

## Description

The present invention relates to a gas analyzer that mainly analyzes hydrocarbon components contained in sample gas such as exhaust gas.

As is generally known, a hydrogen flame ionization detector mixes hydrogencontaining gas into sample gas containing hydrocarbon, burns the mixed gas in a combustion chamber to which an electric field is applied in order to ionize the gas, captures the ionized hydrocarbon as a collector current and measures a value of the collector current so as to detect the concentration of hydrocarbon in the sample gas. More concretely, it is so arranged that a pair of electrodes to which a constant voltage is applied are arranged to face each other across the combustion flame, and a minute ionic current that is proportional to a fraction of carbon in the hydrocarbon, namely a collector current flows into a collector electrode as being one of the electrodes. There exists a theory of carbon agglutinating or of chemical ionization as a mechanism of producing an ion wherein hydrocarbon is ionized in a hydrogen flame; however, it has not been fully explained yet.

For the hydrogen flame ionization detector, a fraction of carbon in the hydrocarbon is proportional to the concentration of hydrocarbon of an identical type (a number of atoms of carbon), however, a fraction of carbon in a molecule might not be proportional to the concentration of the hydrocarbon if the hydrocarbon is of a heterogeneous type. More concretely, if C₃H₈ and CH₄ whose concentration is the same are measured by the same hydrogen flame ionization detector, originally a measurement value of C₃H₈ should be the triple of a measurement value of CH₄, however, actually the measurement value of C₃H₈ becomes slightly different from triple of the measurement value of CH₄. This is generally called the relative sensitivity of the hydrocarbon.

In order to improve the relative sensitivity according to Japanese patent application 10-123095 A, a conventional hydrogen flame ionization detector has been given a shape of a collector or the like. In addition, mixed gas, for example, adjusted to be 40% hydrogen and 60% helium is used as the fuel gas. The reason why this kind of mixed gas is used is that if genuine hydrogen gas (100% hydrogen) is used as the fuel gas, the relative sensitivity is deteriorated and tends to have an adverse influence on the measurement accuracy.

However, in case of operating the hydrogen flame ionization detector for a long time, or mounting the hydrogen flame ionization detector on a vehicle, if the mixed gas of 40% hydrogen and 60% helium is used as the fuel gas, it is inevitable to mount a steel bottle on the vehicle. As a result, there might be a problem concerning the running costs or the security and there might be a limit concerning weight saving or downsizing.

The present invention intends to provide a gas analyzer including a hydrogen flame ionization detector that solves the above-mentioned problems.

Advantageously, the running costs are reduced. The security, on the other hand is improved so that weight can be saved and downsized, whereas the relative sensitivity is secured.

More specifically, a gas analyzer in accordance with this invention is characterized by comprising a hydrogen flame ionization detector that mixes sample gas with fuel gas, burns the mixed gas in a combustion chamber and detects an ionic current generated at the time when the mixed gas is burnt by a collector, a fuel gas supplying part that supplies the hydrogen flame ionization detector with hydrogen gas whose concentration is generally 100% as the fuel gas and a relative sensitivity controlling device that improves a relative sensitivity of the hydrogen flame ionization detector by controlling the pressure in the combustion chamber to be lower than the pressure of atmospheric air.

In addition, a control method of the hydrogen flame ionization detector in accordance with this invention is characterized by supplying a hydrogen flame ionization detector that mixes sample gas with fuel gas, burns the mixed gas in a combustion chamber and detects an ionic current generating at a time when the mixed gas burns by a collector with hydrogen gas whose concentration is generally 100% as the fuel gas and controlling the pressure in the combustion chamber to be lower than the pressure of atmospheric air.

In accordance with this arrangement, if about 100% hydrogen gas is used as the fuel gas, the relative sensitivity can be secured sufficiently. In addition, since it is possible to use 100% hydrogen gas as the fuel gas with keeping the relative sensitivity, a device such as a hydrogen generator can be used as a fuel gas supplying part without being limited to a steel bottle, thereby solving a problem of running cost or safety and enabling to save weight and to downsize the gas analyzer.

In order to secure the relative sensitivity that meets the regulations of ISO8187, it is preferable that the relative sensitivity controlling device controls the pressure in the combustion chamber to be less than or equal to about -25kPa relative to atmospheric pressure.

As a concrete embodiment, it is represented that exhaust gas discharged from an internal combustion engine is introduced as the sample gas and the concentration (the amount) of hydrocarbon is measured.

In order to make an effect of this invention more remarkably, the gas analyzer is preferably of a vehicle-mountable type. If a heavy material such as a steel bottle is loaded on a vehicle, undue weight is applied to the vehicle and a running load becomes heavy. As a result, the exhaust gas discharged from the vehicle loaded with the heavy material might be different from a state of the exhaust gas discharged at a time of usual running, thereby to cause a problem of failing in an accurate analysis of the exhaust gas. This kind of problem can be cleared up with the present claimed invention.

In accordance with the present claimed invention, it is possible to provide a gas analyzer including a hydrogen flame ionization detector that can solve the problems concerning the running cost and security, that can be weight-saved and downsized, and that can secure the relative sensitivity.

### BRIEF DESCRIPTION OF THE DRAWINGS

Fig. 1 is an overall fluid circuit diagram of a gas analyzer in accordance with one embodiment of the present claimed invention.
Fig. 2 is a structural principle diagram of a hydrogen flame ionization detector in this embodiment.
Fig. 3 is a circuit structural diagram of an information-processing unit in this embodiment.
Fig. 4 is a functional block diagram of the information processing unit in this embodiment.
Fig. 5 is a graph of an examination result showing an effect by the gas analyzer in this embodiment in comparison with an effect by a conventional gas analyzer.
Fig. 6 is a graph of an examination result showing a relationship between the pressure in the combustion chamber of the hydrogen flame ionization detector and the relative sensitivity in this embodiment.

### DETAILED DESCRIPTION OF THE PREFERRED EMBODIMENTS

An embodiment of the present claimed invention will be explained in detail with reference to the accompanying drawings.

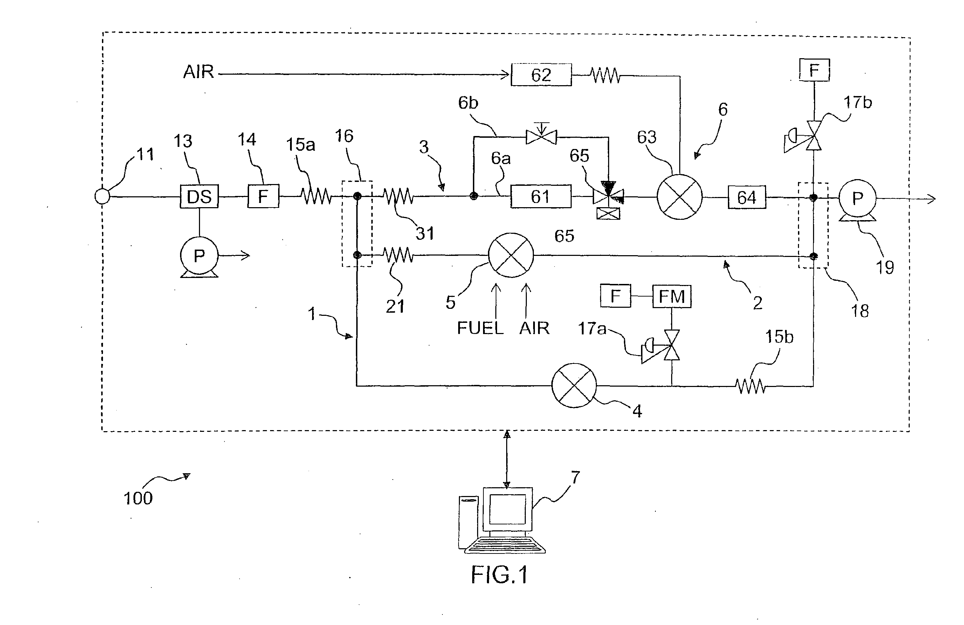

A vehicle-mountable exhaust gas analyzer 100 (Fig. 1) serves to measure the concentrations of various components in an exhaust gas as a sample gas while the vehicle is driving. The exhaust gas analyzer 100 is loaded on the trunk of the vehicle and, as shown in Fig. 1, comprises three different analyzers 4, 5, 6, a flow path system for supplying the exhaust gas continuously to the analyzers 4, 5, 6, and an information processing unit 7 that receives actually measured data from each analyzer 4, 5, 6 and analyzes them and that controls a valve arranged in the flow path system.

Each component will be described hereinafter.

An infrared gas analyzer 4 serves to measure each concentration of CO, CO₂, H₂O, a hydrogen flame ionization detector 5 serves to measure concentration of THC (total hydro carbon), and a chemiluminescent nitrogen oxide analyzer 6 (hereinafter also called CLD type NOₓ analyzer 6) serves to measure the concentration of NOₓ.

The infrared gas analyzer 4 is of a nondispersive type and irradiates infrared rays of characteristic wavelength corresponding to each of CO, CO₂ and H₂O absorbs on the sample gas (the exhaust gas) and passes the sample gas and measures light intensity of each wavelength by a light detector and outputs each measured value. Then light absorbency of each wavelength can be measured by comparing each output value with a reference value in case there is no light absorption.

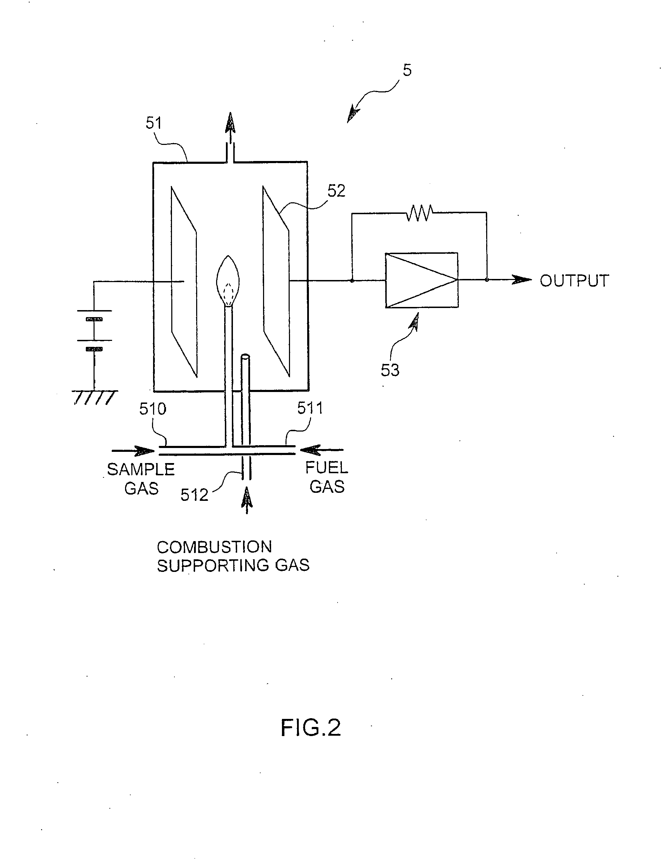

The hydrogen flame ionization detector 5, whose principle diagram is shown in Fig. 2, is of a type wherein fuel gas is mixed into the sample gas (the exhaust gas) at a constant ratio, the mixed gas is burned in a combustion chamber (a chimney) 51 to which an electric field is applied, electric current generated due to ionization of THC contained in the sample gas is captured by a collector 52, and the electric current is amplified and output by an amplifier 53, and the hydrogen flame ionization detector 5 can calculate an amount (concentration) of THC from a value of the electric current output by the amplifier 53. A fuel gas supplying part 511 and a combustion supporting gas supplying part 512 are connected to the combustion chamber (the chimney) 51 in addition to a sample gas supplying part 510 and the exhaust gas as being the sample gas, the fuel gas and the combustion supporting gas (air) are introduced into the combustion chamber (the chimney) 51 through the sample gas supplying part 510, the fuel gas supplying part 511 and the combustion supporting gas supplying part 512.

The CLD type NOₓ analyzer 6 converts all of NOₓ contained in the exhaust gas into NO by an NO converter 61, mixes NO with ozone output by an ozone generator 62 in a reaction vessel 63 so as to cause a chemical reaction, and detects luminescence intensity generated due to the chemical reaction by a light detector (not shown in drawings) and outputs it. In this embodiment, a path 6b that introduces the exhaust gas directly into the reaction vessel 63 is arranged in parallel in addition to a path 6a that introduces the exhaust gas into the reaction vessel 63 through the NO converter 61. The exhaust gas is alternatively introduced into the reaction vessel 63 only through either one of the parallel paths 6a, 6b by means of a valve 65 so that the concentration of NO only contained in the exhaust gas can be measured or the concentration of NOₓ except for NO also can be measured by obtaining difference. The ozone generator 62 imports atmospheric air without dehumidification. A code 64 shows an ozone decomposer.

The flow path system comprises a main flow path 1 that plays a role as a bypath to pass almost all of the exhaust gas, and multiple (two) sub-flow paths 2, 3 arranged in parallel and bifurcated from the main flow path 1. The infrared gas analyzer 4 is arranged on the main flow path 1, the hydrogen flame ionization detector 5 is arranged on one of the sub-flow paths 2 (a first sub-flow path 2) and the CLD type NOₓ analyzer 6 is arranged on other sub-flow path 3 (a second sub-flow path 3) respectively.

An upstream end of the main flow path 1 opens as a main port 11 and a suction pump 19 is arranged at the most downstream side of the main flow path 1. An exhaust duct of a vehicle is connected to the main port 11 and an amount of the exhaust gas required for measurement is introduced into the main flow path 1 by sucking the exhaust gas by the use of the suction pump 19.

More concretely, in succession to the main port 11 a drain separator 13 to remove liquid moisture contained in the exhaust gas, a filter 14, a flow rate control pipe (capillary) 15a, a bifurcated part 16, the infrared gas analyzer 4, a flow rate control pipe (capillary) 15b. an interflow part 18, the suction pump 19 are arranged serially in this order. Since portions from the exhaust duct of the vehicle to the drain separator 13 are connected with an unheated piping alone and at least without using a heated piping, the exhaust gas is introduced into each analyzer 4, 5, 6 in a state wherein only liquid moisture is removed by the drain separator 13 (hereinafter also called as a semi-dry state). A pressure control valve 17a connected downstream of the infrared gas analyzer 4 is to control pressure in the flow path system between the capillaries 15a and 15b, and serves as a role to keep a flow rate and pressure of the exhaust gas flowing into the infrared gas analyzer 4 constant in cooperation with each capillary 15, 15b. In other words, the pressure control valve 17a serves as a role to remove pressure fluctuation due to an effect by pulsation of the suction pump 19 or an effect by pulsation of the exhaust gas.

The sub-flow paths 2, 3 are so arranged to be bifurcated from the main flow path 1 at the bifurcated part 16 and to be connected to the main flow path 1 again at the interflow part 18.

A flow rate control pipe (capillary) 21 and the hydrogen flame ionization detector 5 are arranged in this order on the first sub-flow path 2. The flow rate control pipe 21 is to limit an amount of gas that flows into the first sub-flow path 2 to a flow rate (very small amount compared with the flow rate of the exhaust gas that flows into the main flow path 1) necessary for measuring the concentration of THC.

A flow rate control pipe (capillary) 31 and the CLD type NOₓ analyzer 6 are arranged in this order from upstream on the second sub-flow path 3. The flow rate control pipe (capillary) 31 is to limit an amount of gas that flows into the second sub-flow path 3 to a flow rate (very small amount compared with the flow rate of the exhaust gas that flows into the main flow path 1) necessary for measuring the concentration of NOₓ.

The pressure control valve 17b connected to the interflow part 18 is to control the pressure of each sub-flow path 2, 3, and serves as a role to keep a flow rate and pressure of the exhaust gas flowing into the hydrogen flame ionization detector 5 and the CLD type NOₓ analyzer 6 constant in cooperation with each capillary 21, 22 arranged upstream of each sub-flow path 2, 3.

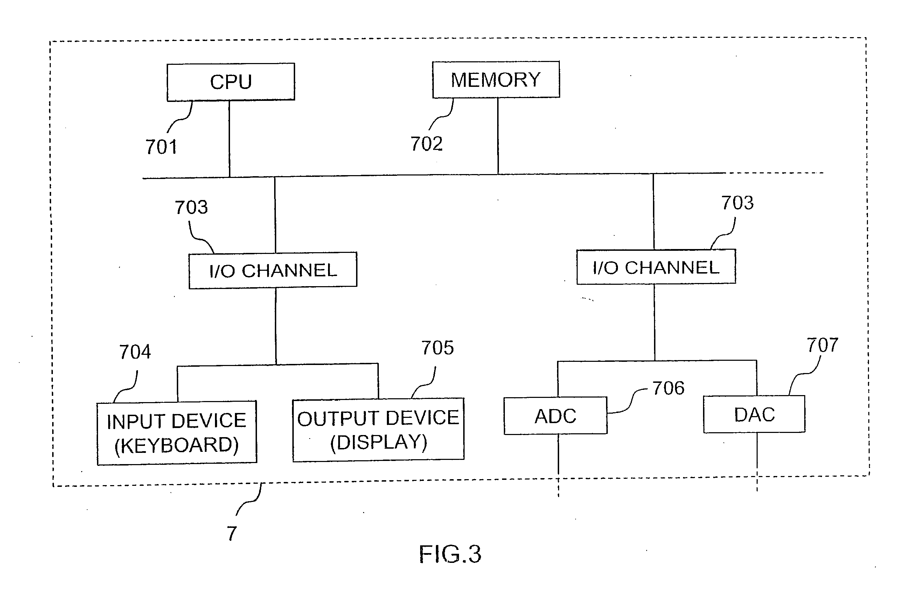

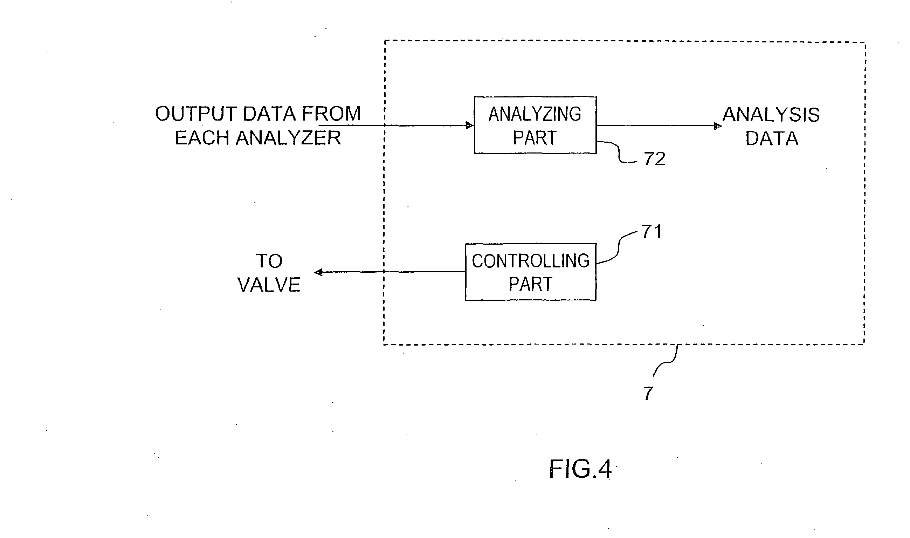

The information processing unit 7 is, as shown in Fig. 3, of multi-purpose or exclusive use comprising a CPU 701, a memory 702, an input/output channel 703, an input device 704 such as a keyboard, and a display 705. An analog-digital converting circuit such as an A/D converter 706, a D/A converter 707, and an amplifier (not shown in drawings) is connected to the input/output channel 703. The information processing unit 7 at least fulfills a function, as shown in Fig. 4. as a controlling part 71 that controls the valve arranged on the flow path system to open or close or temperature of a heater, and an analyzing part 72 that receives detected data output from each analyzer 4, 5, 6 and analyzes them so as to calculate the concentration of each component by a cooperative action of the CPU 701 and its peripheral equipment according to a program stored in a predetermined area of the memory 72. The information processing unit 7 is not necessarily integrated physically, and may be separated into multiple instruments connected by a fixed line or wireless.

Then in this embodiment, hydrogen gas of generally 100% concentration is supplied as the fuel gas to the hydrogen flame ionization detector 5 from the fuel gas supplying part 511 connected to a fuel gas source, not shown in drawings, and the pressure in the combustion chamber 51 is controlled to be lower than the atmospheric pressure, more concretely to be -40kPa by a relative sensitivity controlling device. The pressure control valve 17b connected to the interflow part mixed gas of 40% hydrogen and 60% helium as the fuel gas 18 serves at least as a role of the relative sensitivity controlling device and especially in this embodiment, the pressure control valve 17b fulfills its function as the relative sensitivity controlling device by acting in cooperation with the suction pump 19 arranged in parallel with the pressure control valve 17b.

In accordance with this arrangement, even though 100% hydrogen gas is used as the fuel gas, the relative sensitivity that meets the regulations of IS08187 can be secured. In addition, since it is possible to use 100% hydrogen gas as the fuel gas with keeping the relative sensitivity, a device such as a hydrogen generator that is relatively of light weight and compact can be used as the fuel gas source without being limited to a steel bottle, thereby solving a problem of running cost or safety and enabling to save weight and to downsize the gas analyzer 100.

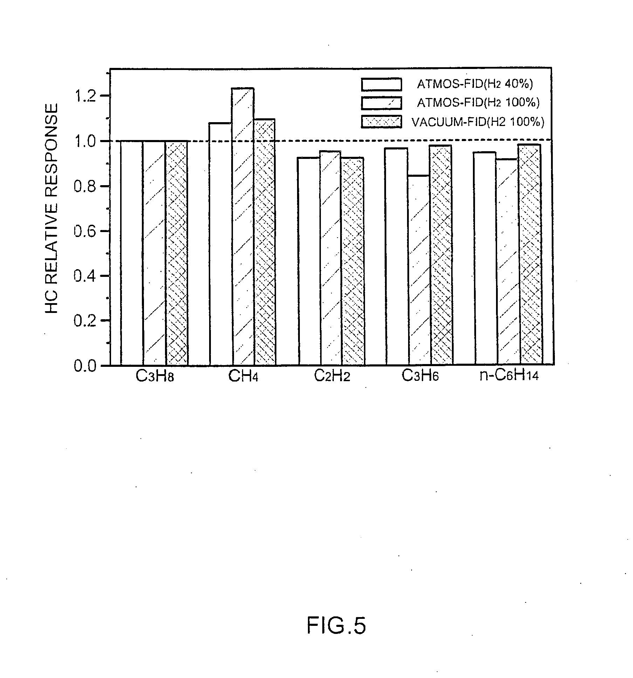

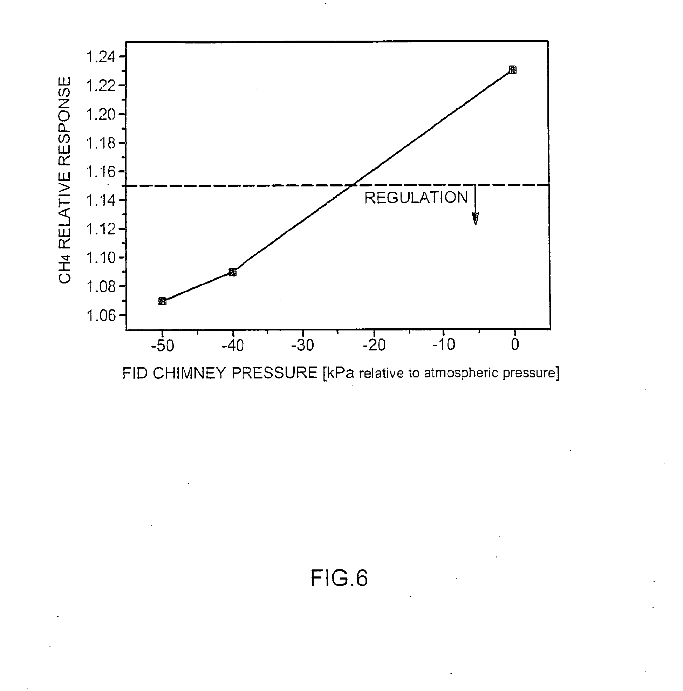

Concrete effects are shown in Fig. 5 and Fig. 6. In Fig. 5, atmos-FID shows a conventional hydrogen flame ionization detector of a normal pressure type, and an examination result (shown as atmos-FID H₂40% in Fig. 5) in case of using mixed gas of 40% hydrogen and 60% helium as the fuel gas and an examination result (shown as atmos-FID H₂100% in Fig. 5) in case of using gas of 100% hydrogen are graphed respectively. In addition, vacuum-FID shows the hydrogen flame ionization detector 5 in accordance with this embodiment, and an examination result (shown as vacuum-FID H₂100% in Fig. 5) in case of using gas of 100% hydrogen as the fuel gas is graphed.

As is clear from Fig. 5, in case of using the gas of H₂ 100% for the conventional hydrogen flame ionization detector of the normal pressure type, the relative sensitivity of especially CH₄, C₃H₆ is deteriorated and the relative sensitivity does not meet the regulation of IS08187 wherein the relative sensitivity of CH₄ is more than or equal to 1.0 and less than or equal to 1.15, the relative sensitivity of C₃H₆ is more than or equal to 0.9 and less than or equal to 1.1.

On the contrary, in case of using the gas of H₂100% for the hydrogen flame ionization detector 5 of depressurization type in accordance with this embodiment, the examination result is almost the same as the examination result in case of using the mixed gas of 40% hydrogen and 60% helium as the fuel gas and the result also meets the regulation of ISO8187.

In addition, in Fig. 6, in case of using the gas of H₂100% as the fuel gas to detect CH₄, a relationship between the pressure in the combustion chamber (the chimney) 51 and the relative sensitivity are graphed. If the pressure in the combustion chamber (the chimney) 51 is kept less than or equal to about -25kPa relative to atmospheric pressure, the relative sensitivity meets the regulation (shown as Regulation in Fig. 6).

The present claimed invention is not limited to the above-mentioned embodiment. For example, a pressure control valve may be arranged serially between the hydrogen flame ionization detector 5 and the suction pump 19 so as to fulfill its function as the relative sensitivity control device in cooperation of the pressure control valve with the suction pump 19 as long as the relative sensitivity control device can control the pressure in the combustion chamber.

In addition, the vehicle-mountable gas analyzer can be used for not only a gas analyzer to analyze multiple components but also for a gas analyzer that measures hydrocarbon alone. The vehicle-mountable gas analyzer can be applied to not only a vehicle-mountable type but also a stand-alone type or an environment measurement use type, and the same operation and effect can be produced as that of the above-mentioned embodiment.

There may be various modifications without departing from the spirit of the invention.

In accordance with this invention, it is possible to provide a gas analyzer including a hydrogen flame ionization detector that can solve problems concerning a running cost and security, that can be weight-saved and downsized, and that can secure the relative sensitivity.

## Claims

1. A gas analyzer (100) comprising a hydrogen flame ionization detector (5) that mixes sample gas with fuel gas, burns the mixed gas in a combustion chamber (51) and detects an ionic current generated at the time when the mixed gas is burnt by a collector (52), a fuel gas supplying part that supplies the hydrogen flame ionization detector (5) with hydrogen gas and a relative sensitivity controlling device (17b)that controls the pressure in the combustion chamber (51) to be lower than the pressure of atmospheric air.

2. The flow gas analyzer (100) of claim 1, wherein an infrared gas analyzer (4) for measuring the concentration of carbon monoxide (CO), carbon dioxide (CO₂) and water gas (H₂O) is provided.

3. The flow gas analyzer (100) of claim 1 or 2, wherein an infrared gas analyzer (4) for measuring the concentration of a combustion gas, especially of carbon monoxide (CO), carbon dioxide (CO₂) and water gas (H₂O), is provided.

4. The flow gas analyzer (100) of any of claims 1 through 3 wherein the ionization detector (5) comprises means for mixing a fuel gas into a sample gas, preferably the exhaust gas of an internal combustion engine.

5. The flow gas analyzer (100) of any of claims 1 through 3 wherein means for applying an electric field to the combustion chamber (51) are provided.

6. The flow gas analyzer (100) of claim 5 wherein an electric current generated due to ionization of THC is capturable by a collector (52).

7. The flow gas analyzer (100) of any of claims 1 through 6 wherein an NOₓ analyzer (6) is provided for converting NOₓ contained in the exhaust gas into NO by an NO converter (61).

8. The flow gas analyzer (100) of claim 7 wherein the analyzer (6) comprises an NO converter (61) for mixing NO with ozone output by an ozone generator (62).

9. The flow gas analyzer (100) of any of claims 1 through 8 wherein a plurality of paths is connected to a main port (11) for the exhaust duct of an engine, preferably in a vehicle, wherein the paths comprise a main flow path (1).

10. The flow gas analyzer (100) of claim 9 wherein an amount of the exhaust gas is sucked from the main port (11) by a suction pump.

11. The flow gas analyzer (100) of claims 9 or 10 wherein a drain separator (13), at least one flow rate control pipe (15a, 15b) and the infrared gas analyzer (4) are provided in the main path (1).

12. The flow gas analyzer (100) of any of claims 9 through 11 wherein a first and a second sub-flow paths (2, 3) branch off of the main path (1) wherein the hydrogen flame ionization detector (5) is arranged in the first sub-flow path (2) and the NOx analyzer (6) is arranged in the second sub-flow path (3).

13. The flow gas analyzer (100) of any of claims 1 through 11 wherein the flow gas analyzer (100) is of a vehicle-mountable type.

14. A method of analyzing a mixture of a sample gas with a fuel gas wherein the mixture of gases is burnt in a combustion chamber (51) of a hydrogen flame ionization detector (5) and wherein an ionic current is detected that is generated at the time when the mixed gas is burnt by a collector (52), wherein a fuel gas supplying part supplies the hydrogen flame ionization detector (5) with hydrogen gas and a relative sensitivity controlling device (17b) controls the pressure in the combustion chamber (51) to be lower than the pressure of atmospheric air.

15. The method of claim 14 wherein the concentration of hydrogen gas is about 100 % of the concentration of the fuel gas.

16. The method of claims 14 or 15 , wherein the relative sensitivity controlling device (17b) controls the pressure in the combustion chamber (51) to be less than or equal to about -25kPa relative to atmospheric pressure.

17. The method of claims 14 through 16 , wherein exhaust gas discharged from an internal combustion engine is introduced as the sample gas.
